# EUROPÄISCHE PATENTSCHRIFT

(11) **EP 1 413 809 B1**
(45) Veröffentlichungstag und Bekanntmachung des Hinweises auf die Patenterteilung: **25.09.2019**
(21) Anmeldenummer: 03024227.5
(22) Anmeldetag: 22.10.2003
(51) Int. Cl.: F16K 17/04, F01N 3/20

(54) **Bauteil einer Abgasnachbehandlungseinrichtung mit einer Ausgleichsvorrichtung zur Aufnahme der Volumenausdehnung von Medien**
Component of an exhaus gas aftertreatment device with compensation device to allow expansion of a medium
Pièce d'un appareil de post-traitement de gaz d'échappement avec dispositiff pour compenser l'expansion volumétrique d'un milieu

(30) Priorität: 25.10.2002 DE 10249750
(43) Veröffentlichungstag der Anmeldung: 28.04.2004
(73) Patentinhaber: Cummins Ltd., Middlesex, TW18 2BD (GB)
(72) Erfinder: Bleeck, Matthias, 63739 Aschaffenburg (DE); Zapf, Friedrich, 97753 Karlstadt (DE)
(74) Vertreter: Beyer, Andreas

(56) Entgegenhaltungen:
- DE-A1- 10 047 531
- NL-C- 1 016 384
- US-A- 5 408 970
- US-A- 5 590 631
- US-A- 5 701 869
- US-A- 5 727 529
- US-A- 5 785 025
- US-A- 5 842 455
- US-B1- 6 321 719

## Beschreibung

Die Erfindung betrifft eine Abgasnachbehandlungseinrichtung mit einer Ausgleichsvorrichtung zur Aufnahme der Volumenausdehnung von Medien, insbesondere einer Harnstoff-Wasser-Lösung, beim Einfrieren nach dem Oberbegriff des Anspruches 1.

Es ist beispielsweise bei Abgasnachbehandlungseinrichtungen von Dieselkraftfahrzeugen bekannt, eine Harnstoff-Wasser-Lösung aus einem Vorratstank zu fördern und unter einem bestimmten Druck einem Einspritzventil zuzuführen. Bei tiefen Außentemperaturen besteht das Problem, daß dieses Medium gefrieren kann. Dann treten wegen der Volumenausdehnung des Mediums Probleme auf.

Aus dem entfernten Gebiet der Kraftstoffsysteme sind Brennstoffsysteme, Druckdämpfer, Kraftstoffspeicher, Kraftstoffzuführsysteme, Druckspeicher und Überdruckspeicher bekannt, die unterschiedliche Membranen in diversen Sammlervorrichtungen, teilweise mit Umleitungsentlastungsvorrichtungen, für erhitzte olefine Fluide beschreiben.

Ein solches Brennstoffsystem ist beispielsweise in der US 5,408,970 offenbart. Druckdämpfer sind beispielsweise der US 6,321,719 und der NL 1 016 384 C2 entnehmbar. Ein Kraftstoffspeicher ist beispielsweise der US 5,590,631 entnehmbar. Ein Kraftstoffzuführsystem ist beispielsweise in der US 5,701,869 beschrieben, ein Druckspeicher ist der US 5,842,455 entnehmbar. Schließlich ist ein Überdruckregler in der US 5,727,529 offenbart.

Allen genannten Ständen der Technik ist der Nachteil gemeinsam, dass sie ausschließlich Lösungen für unter Druck stehende, erhitzte olefine Fluide anbieten.

Das Dokument DE 100 47 531 A1 offenbart eine Dosiervorrichtung für eine Harnstoff-Wasser-Lösung, die einen Gehäuseblock mit Aussparungen in Form von Bohrungen aufweist, die eine Reduktionsmittelleitung bilden. In einer Ausführungsform der Dosiervorrichtung ist eine in eine Kaverne mündende Bohrung vorgesehen, wobei die Kaverne als nach außen hin konische Bohrung ausgeführt und mit einem Flansch verschlossen ist. Beim Gefrieren dehnt sich eine Flüssigkeit in der in die Kaverne mündenden Bohrung aus und drückt gegen den Gehäuseblock, wobei die Lagerung des als federndes Element ausgebildeten Flansches so dimensioniert ist, dass er dem Eisdruck rechtzeitig durch axiales Auswandern nachgibt, bevor das Gehäuse birst.

Der Erfindung liegt die Aufgabe zugrunde, die gattungsgemäße Einrichtung mit Ausgleichsvorrichtung so auszubilden, daß sie einerseits einfach eingebaut werden kann und andererseits die mit dem Einfrieren des Mediums zusammenhängenden Probleme vermeidet.

Diese Aufgabe wird bei der gattungsgemäßen Einrichtung erfindungsgemäß mit den kennzeichnenden Merkmalen des Anspruches 1 gelöst.

Bei der Ausgleichsvorrichtung der erfindungsgemäßen Einrichtung wird die das Medium enthaltende Aufnahme durch ein Dichtelement begrenzt, das gegen den Betriebsdruck des Mediums vorgespannt ist. Sollte das Medium infolge tiefer Temperaturen gefrieren, wird die dabei auftretende Volumenausdehnung des Mediums dadurch aufgefangen, daß das Dichtelement gegen die Vorspannkraft verschoben wird. Dadurch wird der Aufnahmeraum für das Medium vergrößert, so daß die Volumenausdehnung beim Einfrieren des Mediums zu keinen Problemen führt. Steigen die Temperaturen wieder, wird das Dichtelement unter der Vorspannkraft zurückgeschoben und dementsprechend der Aufnahmeraum für das Medium wieder verkleinert.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsbeispiele näher erläutert. Es zeigen
- Fig. 1: im Schnitt eine erste Ausführungsform einer Ausgleichsvorrichtung einer erfindungsgemäßen Abgasnachbehandlungseinrichtung,

- Fig. 2: in einer Darstellung entsprechend Fig. 1 eine zweite
Ausgleichsvorrichtung einer Einrichtung, die nicht zum Schutzumfang gehört.

Die Ausgleichsvorrichtung ist beispielsweise an einer Aufnahme von Medium, insbesondere einer Harnstoff-Wasser-Lösung vorgesehen, wie sie bei Hydraulikkomponenten insbesondere zur Abgasnachbehandlung von Kraftfahrzeugen, insbesondere Dieselkraftfahrzeugen, eingesetzt wird. Die Ausgleichsvorrichtung kann darüber hinaus für alle Medien eingesetzt werden, die gefrieren können und dabei eine Volumenausdehnung erfahren.

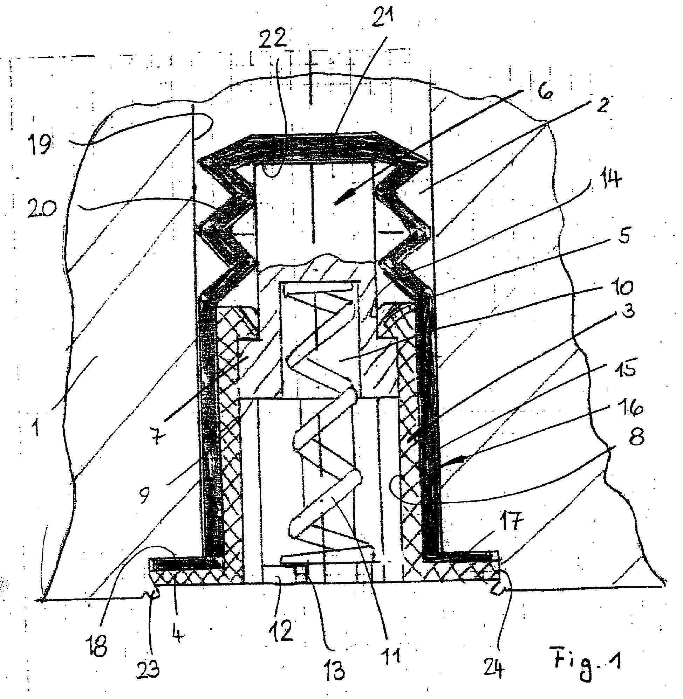

Die Ausgleichsvorrichtung gemäß Fig. 1 wird in ein Bauteil 1 eingesetzt, das eine Aufnahme 2, vorzugsweise eine Bohrung, für die Ausgleichsvorrichtung aufweist. Die Ausgleichsvorrichtung hat eine Hülse 3, die vorteilhaft aus Kunststoff besteht und an ihrem einen Ende einen radial nach außen gerichteten Flansch 4 aufweist. Am gegenüberliegenden Ende ist die Hülse 3 mit einem radial nach innen gerichteten Flansch 5 versehen, der in Radialrichtung schmaler ist als der Flansch 4. Der Flansch 5 dient als Anschlag für einen Kolben 6, der an seinem dem Flansch 4 zugewandten Ende einen radial nach außen gerichteten Flansch 7 hat. Mit ihm gleitet der Kolben 6 an der Innenwand 8 der Hülse 3. Der Kolben 6 ist an seiner den Flansch 7 aufweisenden Stirnseite 9 mit einer zentralen Vertiefung 10 versehen, in die das eine Ende einer Schraubendruckfeder 11 ragt. Unter der Kraft dieser Feder 11 wird der Flansch 7 des Kolbens 6 gegen den Flansch 5 der Hülse 3 gedrückt.

Das andere Ende der Druckfeder 11 stützt sich an einem Absatz in der Hülse 3 oder an einem Deckel 12 ab, der mit wenigstens einer Entlüftungsöffnung 13 versehen ist. Der Deckel 12 liegt in Höhe des Flansches 4 der Hülse 3 und ist in geeigneter Weise in der Hülse 3 befestigt. Er kann beispielsweise in das entsprechende Ende der Hülse 3 eingeschraubt sein, so daß sich die Vorspannung der Druckfeder 11 stufenlos einstellen läßt.

Der Kolben 6 ragt axial aus der Hülse 3 und liegt außerhalb seines Flansches 7 an der Innenseite 14 des Flansches 5 an.

Die Hülse 3 ragt in einen zylindrischen Teil 15 eines napfförmigen Dichtelementes 16, das an seinem offenen Ende mit einem radial nach außen gerichteten Flansch 17 versehen ist. Er ist in der Einbaulage zwischen dem Flansch 4 der Hülse 3 und einer radialen Schulterfläche 18 des Bauteiles 1 eingeklemmt. Der zylindrische Teil 15 des Dichtelementes 16 liegt zwischen der zylindrischen Innenwand 19 der Aufnahme 2 und der Hülse 3. Vorzugsweise ist der zylindrisehe Teil 15 zwischen der Hülse 3 und der Innenwand 19 der Aufnahme 2 eingeklemmt.

Der zylindrische Teil 15 des Dichtelementes 16 geht in einen Bauteilbereich 20 über, der elastisch verformbar ist und einen geschlossenen Boden 21 aufweist. Er begrenzt die Aufnahme 2, in der sich das Medium befindet. Der Balgteil 20 ist vorgespannt und liegt an der freien Stirnfläche 22 des Kolbens 6 an. Auf den Boden 21 und den Balgteil 20 des Dichtelementes 16 wirkt von außen der Betriebsdruck, unter dem das Medium steht. Darum ist die Vorspannung der Druckfeder 11 auf diesen Betriebsdruck abgestimmt. Die Federvorspannung entspricht dem Betriebsdruck, unter dem das Medium steht. Der Balgteil 20 steht axial über den Flansch 4 der Hülse 3 vor und ist verformbar.

Der Flansch 4 der Hülse 3 wird durch eine Bördelung 23 am Rand einer Öffnung 24 des Bauteiles 1 festgeklemmt.

Die Ausgleichsvorrichtung läßt sich einfach in der Aufnahme 2 des Bauteiles 1 befestigen. Die Hülse 3 mit dem auf ihr sitzenden Dichtelement 16 wird in die Aufnahme 2 eingesetzt und durch Verformung der Bördelung 23 in der Aufnahme befestigt. Der Kolben 6 und die Druckfeder 11 können anschließend in die vormontierte Hülse 3 eingesetzt und mit dem Deckel 12 gesichert werden. Es ist aber auch möglich, den Kolben 6, die Druckfeder 11 und den Deckel 12 zunächst in der Hülse 3 unterzubringen. Dann wird die so vormontierte Ausgleichsvorrichtung in die Aufnahme 2 eingesetzt und mittels der Bördelung 23 gehalten.

Sollte das in der Aufnahme 2 befindliche Medium, vorzugsweise die Harnstoff-Wasser-Lösung, gefrieren und sich ausdehnen, wird der Kolben 6 gegen die Kraft der Druckfeder 11 unter entsprechender Verformung des Balgteiles 20 verschoben, so daß die Volumenausdehnung des Mediums sicher aufgefangen werden kann. Sobald dieses Medium wieder auftaut, drückt die Druckfeder 11 den Kolben 6 zurück, der seinerseits über den Boden 21 den Balgteil 20 ausdehnt. Die Ausgleichsvorrichtung sorgt somit zuverlässig dafür, dass Volumenausdehnungen beim Einfrieren des Mediums in der Aufnahme 2 nicht zu einer Beschädigung führen.

Die Ausgleichsvorrichtung oder Teile von ihr können bei Bedarf einfach ausgebaut werden. Die Druckfeder 11 und der Kolben 6 können nach Lösen des Deckels 12 ohne Ausbau der Hülse 3 einfach ausgetauscht werden.

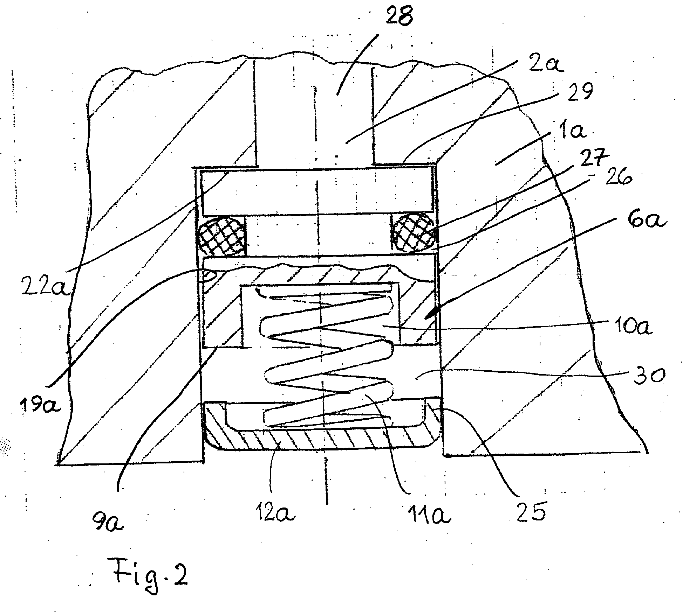

Bei einem das Verständnis der Erfindung erleichternden Beispiel gemäß Fig. 2 stützt sich die Schraubendruckfeder 11a mit einem Ende an einem Deckel 12a ab, dessen Rand 25 rechtwinklig abgebogen ist. Mit diesem Rand 25 ist der Deckel 12a in die Aufnahme 2a des Bauteiles 1a eingepresst. Der Rand 25 des Deckels 12a ist gegen den Kolben 6a gerichtet, der in seiner Stirnseite 9a die Vertiefung 10a aufweist, in die das andere Ende der Druckfeder 11a ragt.

Der Kolben 6a ist mit einer Ringnut 26 versehen, in der ein Dichtring 27 untergebracht ist. Er ist hier ein O-Ring, kann aber auch jede andere geeignete Ausbildung haben, beispielsweise eine Quadring sein. Mit dem Dichtring 27 liegt der Kolben 6a dichtend an der Innenwand 19a der Aufnahme 2a an. Sie hat einen im Durchmesser verringerten Abschnitt 28, der über eine radiale, ringförmige Schulterfläche 29 in einen im Durchmesser größeren Abschnitt 30 übergeht, in dem der Kolben 6a und der Deckel 12a untergebracht sind. Der Kolben 6a liegt unter der Kraft der Druckfeder 11 a mit seiner Stirnseite 22a an der Schulterfläche 29 an. Wie beim oben erläuterten Ausführungsbeispiel entspricht die Vorspannung der Druckfeder 11a dem Betriebsdruck des Mediums, das sich im Aufnahmeabschnitt 28 befindet.

Wie beim oben erläuterten Ausführungsbeispiel kann eine Volumenausdehnung des Mediums beim Einfrieren durch Verschieben des Kolbens 6a gegen die Kraft der Druckfeder 11a aufgefangen werden. Der Kolben 6a hat vorteilhaft einen Außendurchmesser, der geringfügig kleiner ist als der Durchmesser des Aufnahmeabschnittes 30. Dadurch kann der Kolben 6a problemlos in der Aufnahme 2a verschoben werden.

Der Deckel 12a ist vorteilhaft mit wenigstens einer (nicht dargestellten) Entlüftungsöffnung versehen, so dass die Luft beim Verschieben des Kolbens 6a aus dem Aufnahmeabschnitt 30 nach außen entweichen und beim Zurückfahren des Kolbens 6a eingesaugt werden kann.

Die Ausgleichsvorrichtung lässt sich wiederum einfach in der Aufnahme 2a des Bauteiles 1 a einbauen. Der Kolben 6a und die Druckfeder 11a werden in den Aufnahmeabschnitt 30 so weit geschoben, bis der Kolben 6a an der Schulterfläche 29 anliegt. Anschließend wird der Deckel 12a in den Aufnahmeabschnitt 30 eingepresst. In der Einbaulage liegt der Deckel 12a vorteilhaft versenkt. Es ist ferner möglich, den Deckel 12a mit einem Außengewinde zu versehen, das in ein Innengewinde in der Innenwand 19a des Aufnahmeabschnittes 30 geschraubt werden kann.

Die beschriebenen Ausgleichsvorrichtungen können an unterschiedlichsten Stellen der Bauteile 1, 1a mit geringem Aufwand eingebaut werden. Dabei arbeiten die Ausgleichsvorrichtungen zuverlässig und nehmen Volumenausdehnungen des Mediums beim Einfrieren auf, so dass Beschädigungen durch das gefrierende Medium in der Aufnahme 2, 2a einwandfrei verhindert werden.

## Patentansprüche

1. Abgasnachbehandlungseinrichtung, aufweisend ein Bauteil mit einer Aufnahme (2),
wobei die Aufnahme (2) dazu eingerichtet ist, ein Medium aufzunehmen, das ein Abgasnachbehandlungsmedium ist und gefrieren kann,
wobei in der Aufnahme (2) eine Ausgleichsvorrichtung zur Aufnahme einer Volumenausdehnung des Mediums derart untergebracht ist, dass beim Einfrieren die Volumenausdehnung des Mediums aufgenommen wird, indem die Aufnahme (2) durch ein Dichtelement (16) begrenzt ist, das derart ausgelegt ist, gegen einen Betriebsdruck des Mediums vorgespannt zu werden,
**dadurch gekennzeichnet, dass** das Dichtelement (16) einen vorteilhaft an der Stirnseite (22) eines Kolbens (6) anliegenden Balgteil (20) aufweist, wobei der Balgteil (20) von einer Seite durch den Betriebsdruck des Mediums und von der anderen Seite durch die Vorspannkraft beaufschlagt ist, und
dass das Dichtelement (16) unter der Kraft wenigstens einer Druckfeder (11) steht, die sich vorteilhaft an einem Deckel (12) abstützt, der in der Aufnahme (2) gehalten ist.

2. Abgasnachbehandlungseinrichtung nach Anspruch 1,
**dadurch gekennzeichnet, dass** das Abgasnachbehandlungsmedium eine Harnstoff-Wasser-Lösung ist.

3. Abgasnachbehandlungseinrichtung nach Anspruch 1,
**dadurch gekennzeichnet, dass** das Dichtelement (16) über einen Teil einer Länge eine Hülse (3) umgibt, die in die Aufnahme (2) eingesetzt ist und vorteilhaft wenigstens einen Anschlag (5) zur Begrenzung des Verschiebeweges des Kolbens (6) aufweist.

4. Abgasnachbehandlungseinrichtung nach Anspruch 3,
**dadurch gekennzeichnet, dass** der Anschlag (5) ein radial nach innen gerichteter Flansch an einem Ende der Hülse ist.

5. Abgasnachbehandlungseinrichtung nach Anspruch 3 oder 4,
**dadurch gekennzeichnet, dass** der Kolben (6) axial über die Hülse (3) ragt, die vorzugsweise am anderen Ende einen Halterungsteil (4) aufweist, der vorteilhaft ein radial nach außen gerichteter Flansch ist.

6. Abgasnachbehandlungseinrichtung nach einem der Ansprüche 3 bis 5,
**dadurch gekennzeichnet, dass** das Dichtelement (16) zwischen der Hülse (3) und der Innenwand (19) der Aufnahme (2) gehalten ist.

7. Abgasnachbehandlungseinrichtung nach einem der Ansprüche 3 bis 6,
**dadurch gekennzeichnet, dass** das Dichtelement (16) an einem Ende mit wenigstens einem Halterungsteil (17) versehen ist, der vorteilhaft ein radial nach außen gerichteter Flansch ist.

8. Abgasnachbehandlungseinrichtung nach Anspruch 7,
**dadurch gekennzeichnet, dass** der Halterungsteil (17) des Dichtelementes (16) durch den Halterungsteil (4) der Hülse (3) gehalten ist.

9. Abgasnachbehandlungseinrichtung nach einem der Ansprüche 5 bis 8,
**dadurch gekennzeichnet, dass** der Halterungsteil (4) der Hülse (3) durch eine Bördelung (23) des Bauteiles (1) gehalten ist.

## Claims

1. Exhaust gas aftertreatment device, comprising a component having a receiver (2),
wherein the receiver (2) is adapted to receive a medium which is an exhaust gas aftertreatment medium and is able to freeze,
wherein a compensation device for compensating for a volumetric expansion of the medium is accommodated in the receiver (2) in such a manner that, on freezing, the volumetric expansion of the medium is compensated for in that the receiver (2) is delimited by a sealing element (16) which is configured to be biased against an operating pressure of the medium,
**characterised in that** the sealing element (16) has a bellows portion (20) advantageously resting on the end face (22) of a piston (6), wherein the bellows portion (20) is acted upon from one side by the operating pressure of the medium and from the other side by the biasing force, and
**in that** the sealing element (16) is under the force of at least one compression spring (11) which is advantageously supported on a cover (12) which is held in the receiver (2).

2. Exhaust gas aftertreatment device according to claim 1,
**characterised in that** the exhaust gas aftertreatment medium is a urea-water solution.

3. Exhaust gas aftertreatment device according to claim 1,
**characterised in that** the sealing element (16) surrounds a sleeve (3) over a portion of a length, which sleeve is inserted into the receiver (2) and advantageously has at least one stop (5) for limiting the displacement path of the piston (6).

4. Exhaust gas aftertreatment device according to claim 3,
**characterised in that** the stop (5) is a radially inwardly directed flange at one end of the sleeve.

5. Exhaust gas aftertreatment device according to claim 3 or 4,
**characterised in that** the piston (6) projects axially beyond the sleeve (3), which preferably has at the other end a holding portion (4) which is advantageously a radially outwardly directed flange.

6. Exhaust gas aftertreatment device according to any one of claims 3 to 5,
**characterised in that** the sealing element (16) is held between the sleeve (3) and the inside wall (19) of the receiver (2).

7. Exhaust gas aftertreatment device according to any one of claims 3 to 6,
**characterised in that** the sealing element (16) is provided at one end with at least one holding portion (17), which is advantageously a radially outwardly directed flange.

8. Exhaust gas aftertreatment device according to claim 7,
**characterised in that** the holding portion (17) of the sealing element (16) is held by the holding portion (4) of the sleeve (3).

9. Exhaust gas aftertreatment device according to any one of claims 5 to 8,
**characterised in that** the holding portion (4) of the sleeve (3) is held by a crimped portion (23) of the component (1).

## Revendications

1. Dispositif de post-traitement des gaz d'échappement, présentant un élément structural comprenant un logement (2),
le logement (2) étant conçu pour loger un milieu qui est un milieu de post-traitement des gaz d'échappement et qui peut geler,
dans le logement (2) est logé un dispositif de compensation pour loger une expansion du volume du milieu de sorte que lors du gel, l'expansion du volume du milieu se trouve logée, du fait que le logement (2) est limité par un élément d'étanchéité (16) qui est conçu de sorte à être précontraint contre une pression de fonctionnement du milieu,
**caractérisé en ce que** l'élément d'étanchéité (16) présente avantageusement une partie de soufflet (20) disposée sur la face avant (22) d'un piston (6), la partie de soufflet (20) est soumise d'un côté à la pression de fonctionnement du milieu et de l'autre côté à la force de précontrainte, et
**en ce que** l'élément d'étanchéité (16) est soumis à la force d'au moins un ressort de pression (11) qui s'appuie avantageusement sur un couvercle (12) qui est maintenu dans le logement (2).

2. Dispositif de post-traitement des gaz d'échappement selon la revendication 1, **caractérisé en ce que** le milieu de post-traitement des gaz d'échappement est une solution urée-eau.

3. Dispositif de post-traitement des gaz d'échappement selon la revendication 1, **caractérisé en ce que** l'élément d'étanchéité (16) entoure sur une partie d'une longueur, un manchon (3) qui est inséré dans le logement (2) et présente avantageusement au moins une butée (5) destinée à limiter le déplacement du piston (6).

4. Dispositif de post-traitement des gaz d'échappement selon la revendication 3, **caractérisé en ce que** la butée (5) est une bride orientée radialement vers l'intérieur sur une extrémité du manchon.

5. Dispositif de post-traitement des gaz d'échappement selon la revendication 3 ou la revendication 4, **caractérisé en ce que** le piston (6) dépasse axialement du manchon (3) qui de préférence présente sur une autre extrémité une partie de retenue (4), qui est une bride orientée radialement vers l'extérieur.

6. Dispositif de post-traitement des gaz d'échappement selon l'une quelconque des revendications 3 à 5, **caractérisé en ce que** l'élément d'étanchéité (16) est maintenue entre le manchon (3) et la paroi intérieure (19) du logement (2).

7. Dispositif de post-traitement des gaz d'échappement selon l'une quelconque des revendications 3 à 6, **caractérisé en ce que** l'élément d'étanchéité (16) sur une extrémité est pourvu d'au moins une partie de retenue (17) qui est avantageusement une bride orientée radialement vers l'extérieur.

8. Dispositif de post-traitement des gaz d'échappement selon la revendication 7, **caractérisé en ce que** la partie de retenue (17) de l'élément d'étanchéité (16) est maintenue par la partie de retenue (4) du manchon (3).

9. Dispositif de post-traitement des gaz d'échappement selon l'une quelconque des revendications 5 à 8, **caractérisé en ce que** la partie de retenue (4) du manchon est maintenue par un sertissage (23) de l'élément structural (1).
